# EUROPÄISCHE PATENTSCHRIFT

(11) **EP 1 329 674 B1**
(45) Veröffentlichungstag und Bekanntmachung des Hinweises auf die Patenterteilung: **28.11.2007**
(21) Anmeldenummer: 02027893.3
(22) Anmeldetag: 13.12.2002
(51) Int. Cl.: F24J 2/20, F24J 2/50, F24J 2/48

(54) **Solarthermischer Kollektor**
Solar collector
Collecteur solaire

(30) Priorität: 11.01.2002 DE 10201572
(43) Veröffentlichungstag der Anmeldung: 23.07.2003
(73) Patentinhaber: Artec Engineering GmbH, 74193 Schwaigern (DE)
(72) Erfinder: Doll, Theo, Dr., 74193 Schwaigern (DE)
(74) Vertreter: Patentanwälte Ruff, Wilhelm, Beier, Dauster & Partner

(56) Entgegenhaltungen:
- DE-A1- 2 700 714
- DE-A1- 3 046 596
- DE-A1- 19 606 293
- FR-A- 2 328 167
- GB-A- 2 051 340

## Beschreibung

Die Erfindung betrifft einen solarthermischen Kollektor mit einem Kollektorgehäuse, das durch eine obere, einer Solarstrahlung zugewandte Kunststofflage und durch eine untere, der Solarstrahlung abgewandte Kunststofflage gebildet ist, wobei zwischen den beiden Kunststofflagen wenigstens eine Hohlkammer für den Durchfluß eines Wärmetransportmediums, insbesondere Wasser, gebildet ist, und wobei die obere Kunststofflage transparent gestaltet ist, und aus einem anderen Kunststoffmaterial hergestellt ist als die untere Kunststofflage.

Ein derartiger solarthermischer Kollektor ist aus der DE 196 06 293 A1 bekannt. Der solarthermische Kollektor weist ein Kollektorgehäuse auf, das aus zwei tiefgezogenen und miteinander verschweißten Kunststoffplatten gebildet ist. Die beiden Kunststoffplatten bilden zwischen sich eine Hohlkammer, die im Betrieb des solarthermischen Kollektors von Wasser durchströmt ist. Die obere Kunststoffplatte ist im Betrieb der Sonnenstrahlung zugewandt. Die untere Kunststoffplatte ist der Sonnenstrahlung abgewandt und üblicherweise an einer entsprechenden Gebäudefläche befestigt. Die untere Kunststoffplatte ist eingefärbt, wohingegen die obere Kunststoffplatte transparent gestaltet ist. Dadurch wird die Wärmeumwandlung der Sonnenstrahlung im Bereich der unteren, eingefärbten Kunststoffplatte vorgenommen. Hierdurch sollte ein Wärmeverlust an der Oberfläche des Kollektors vermindert werden.

Aus der DE 37 03 856 A1 ist ein Solar-Schlauchkollektor bekannt, der einen Kunststoffschlauch umfasst. Der Kunststoffschlauch ist über einen Teil seines Umfanges transparent, indem er durch Koextrusion aus einem transparenten Kunststoff einerseits und einer dunklen, absorbierenden Kunststoff andererseits hergestellt ist.

In der Praxis hat sich bei diesem Kollektor jedoch gezeigt, dass sich im Inneren der Hohlkammer an der unteren, eingefärbten Kunststoffplatte Mikroorganismen bilden und anlagern. Dies kann zu einer unerwünschten Wasserverunreinigung und Fäulnisbildung führen.

Aufgabe der Erfindung ist es, einen solarthermischen Kollektor der eingangs genannten Art zu schaffen, bei dem Verunreinigungen vermieden werden können und der dennoch einen guten Wirkungsgrad aufweist.

Diese Aufgabe wird dadurch gelöst, dass eine der Hohlkammer zugewandte Innenfläche der oberen Kunststofflage mit einer Absorberschicht versehen ist, und dass die untere Kunststofflage eine gegenüber der oberen Kunststofflage reduzierte Temperaturbeständigkeit aufweist.

Die Absorberschicht absorbiert die Solarstrahlung und wandelt sie in Wärme um. Die Absorberschicht ist relativ dünn gestaltet und weist vorzugsweise eine Dicke zwischen 0,1mm und 0,5mm auf. Durch die endungsgemäße Lösung dient das Kunststoffmaterial der oberen Kunststofflage, die sich relativ zur Solarstrahlung über der Absorberschicht befindet, als Isolator, so dass die mittels der Absorberschicht umgewandelte Wärme direkt von dem Wärmetransportmedium mitgenommen werden kann. Die Absorberschicht ist im Vergleich zur Dicke der Kunststofflage dünn gestaltet, um einen geringen Wärmewiderstand zu gewährleisten. Verunreinigungen oder Ablagerungen können ebenfalls zuverlässig vermieden werden. Es ist ergänzend möglich, die Absorberschicht auf der der Hohlkammer zugewandten Innenseite zusätzlich mit einer Schutzfolie zu überziehen, um so Beschädigungen oder Verunreinigungen der Absorberschicht auch über einen langen Zeitraum zu vermeiden.

In Ausgestaltung der Erfindung ist die Absorberschicht mit der oberen Kunststofflage koextrudiert. Dies ist ein besonders wirtschaftliches Herstellungsverfahren.

In weiterer Ausgestaltung der Erfindung ist die Absorberschicht auf die Innenfläche der oberen Kunststofflage auflaminiert. Dies ist eine alternative bevorzugte Lösung zur Aufbringung der Absorberschicht auf die Innenseite der oberen Kunststofflage.

In weiterer Ausgestaltung der Erfindung ist die untere Kunststofflage zumindest teilweise strahlungsabsorbierend gestaltet. Vorzugsweise ist die untere Kunststofflage eingefärbt. Da die obere Absorberschicht relativ dünn gehalten ist, kann durch diese noch Solarstrahlung hindurchtreten, die dann an der unteren Kunststofflage zusätzlich in Wärme umgewandelt wird. Hierdurch kann der Wirkungsgrad des Kollektors weiter verbessert werden.

In weiterer Ausgestaltung der Erfindung ist die untere Kunststofflage transparent gestaltet. Diese alternative Lösung ermöglicht ebenfalls eine ausgezeichnete Funktion des Kollektors und benötigt einen geringfügig geringeren Herstellungsaufwand, da keine Einfärbung des Kunststoffs erfolgen muß. Zudem wirkt das Kollektorgehäuse durch die transparente Gestaltung der unteren Kunststofflage optisch sehr ansprechend.

Die obere und die untere Kunststofflage sind miteinander verschweißt. Die Verschweißung ermöglicht eine vollkommene Abdichtung der wenigstens einen Hohlkammer des Kollektors und stellt eine äußerst sichere und gleichbleibende dichte Verbindung dar.

Die obere Kunststofflage ist aus einem anderen Kunststoffmaterial hergestellt als die untere Kunststofflage. Vorzugsweise ist die obere Kunststofflage aus Polycarbonat hergestellt. Auch die Absorberschicht besteht aus Polycarbonat. Die obere Kunststofflage weist eine höhere Temperaturbeständigkeit auf als die untere Kunststofflage. Polycarbonat ist temperaturbeständig bis ca. 150°C.

Die untere Kunststofflage kann vorzugsweise aus ABS hergestellt sein. Acrylnitril-Butadien-Styrol (ABS) und Polycarbonat (PC) lassen sich miteinander verschweißen. ABS ist jedoch wesentlich kostengünstiger. Da für die untere Kunststofflage keine so hohe thermische Belastung entsteht, muß diese auch keine so hohe Temperaturbeständigkeit aufweisen wie die obere Kunststofflage. ABS ist jedoch wesentlich besser verschweißbar als PC. Die untere Kunststofflage trägt somit maßgeblich dazu bei, dass eine gute und sichere Verschweißung mit der oberen Kunststofflage entsteht. Aufgrund der reduzierten Temperaturbeständigkeit der unteren Kunststofflage ist diese kostengünstiger, wodurch insgesamt die Herstellungskosten des Kollektorgehäuses gering gehalten werden können.

Weitere Vorteile und Merkmale der Erfindung ergeben sich aus den Ansprüchen. Nachfolgend ist ein bevorzugtes Ausführungsbeispiel der Erfindung beschrieben und anhand der Zeichnungen dargestellt.
- Fig. 1: zeigt in einer Draufsicht eine Ausführungsform eines erfindungsgemäßen solarthermischen Kollektors und
- Fig. 2: in stark vergrößerter, teilweise geschnittener Darstellung einen Ausschnitt II-II des Kollektorgehäuses nach Fig. 1.

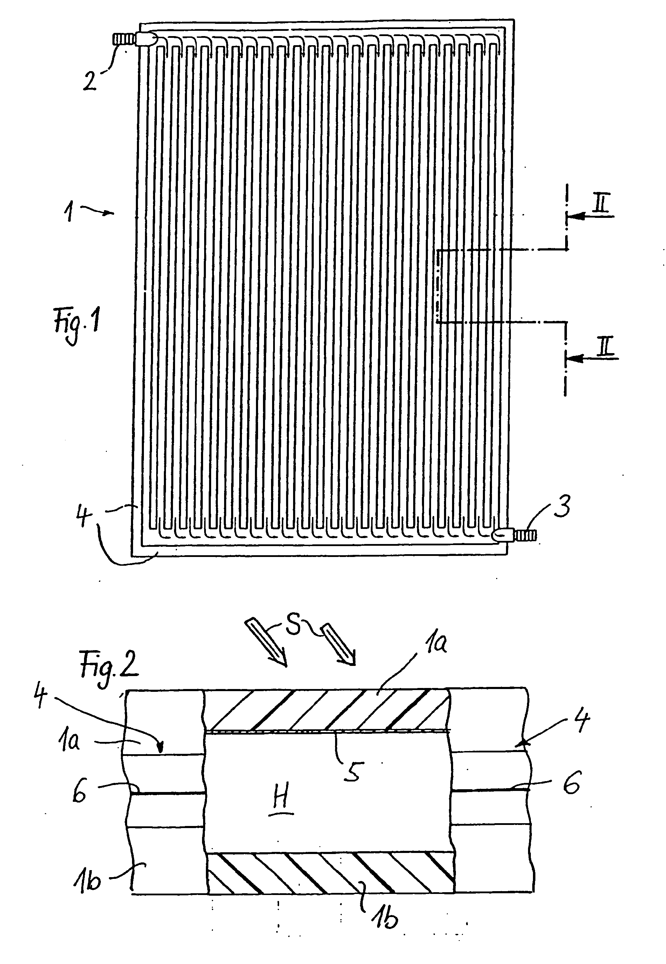

Ein solarthermischer Kollektor nach den Fig. 1 und 2 entspricht von seinem grundsätzlichen Aufbau her einem bekannten solarthermischen Kollektor, wie er aus der DE 196 06 293 A1 bekannt ist. Der solarthermische Kollektor 1 weist eine einer Solarstrahlung S (Fig. 2) zugewandte obere Kunststofflage 1a sowie eine der Solarstrahlung S abgewandte untere Kunststofflage 1b auf, die entsprechend der Offenbarung in der DE 196 06 293 A1 jeweils als Kunststoffplatten tiefgezogen und in einem äußeren, umlaufenden Randbereich 4 umlaufend miteinander verschweißt sind. Der Kollektor 1 weist einen Eintrittsstutzen 2 für ein Wärmetransportmedium in Form von Wasser sowie einen Austrittsstutzen 3 auf, die an einen entsprechenden, nicht dargestellten Wasserkreislauf angeschlossen sind. Bezüglich der allgemeinen Merkmale des solarthermischen Kollektors wird ergänzend auf die Offenbarung in der DE 196 06 293 A1 verwiesen.

Die beiden Kunststofflagen 1a bilden zwischen sich eine Hohlkammer H, die im Betrieb des Kollektors von Wasser durchströmt wird. Die der Hohlkammer H zugewandte Innenseite der oberen Kunststofflage 1a ist mit einer Absorberschicht 5 versehen, die vorzugsweise eine Dicke zwischen 0,2mm und 0,3mm aufweist. Auch die Absorberschicht 5 ist aus Kunststoff, vorliegend aus PC, hergestellt. Beim dargestellten Ausführungsbeispiel ist die Absorberschicht 5 bei der Herstellung der Kunststoffplatte für die Kunststofflage 1a zusammen mit dieser koextrudiert, wodurch sich bereits bei der Herstellung die flächige, stoffschlüssige Verbindung der Absorberschicht 5 mit der oberen Kunststofflage 1a ergibt. Die Absorberschicht 5 wandelt die durch die transparente obere Kunststofflage 1a hindurchtretende Solarstrahlung S in Wärme um und gibt diese an das vorbeiströmende Wasser ab.

Die obere Kunststofflage 1a wirkt als Isolierkörper für die Absorberschicht 5.

Die untere Kunststofflage 1b ist beim dargestellten Ausführungsbeispiel aus einem anderen Kunststoff, nämlich aus ABS, hergestellt. Diese kann teiltransparent oder auch nicht transparent, hell oder dunkel eingefärbt sein. Da die Solarstrahlung S zumindest zu einem großen Teil bereits durch die obere Absorberschicht 5 in Wärme umgewandelt wird, ist die untere Kunststofflage 1b keiner großen thermischen Belastung mehr ausgesetzt.

In Fig. 2 ist schematisch eine umlaufende Schweißnaht 6 dargestellt, mittels der die obere und die untere Kunststofflage 1a, 1b in dem umlaufenden Randbereich 4 durchgängig und dicht miteinander verschweißt sind. Der solarthermische Kollektor wird insbesondere an Außenflächen von Gebäuden, d.h. im Dachbereich oder im Fassadenbereich, eingesetzt und dient insbesondere zur Warmwasserbereitung.

## Patentansprüche

1. Solarthermischer Kollektor (1) mit einem Kollektorgehäuse das durch eine obere, einer Solarstrahlung zugewandten Kunststofflage (1a) und durch eine untere, der Solarstrahlung abgewandten Kunststofflage (1b) gebildet ist, wobei zwischen den beiden Kunststofflagen (1a, 1b) wenigstens eine Hohlkammer (H) für den Durchfluss eines Wärmetransportmediums, insbesondere Wasser, gebildet ist, wobei die obere Kunststofflage (1a) transparent gestaltet ist, die obere und die untere Kunststofflage (1a, 1b) miteinander verschweißt sind und die obere Kunststofflage (1a) aus einem anderen Kunststoffmaterial hergestellt ist als die untere Kunststofflage (1b), **dadurch gekennzeichnet, dass** die der Hohlkammer (H) zugewandte Innenfläche der oberen Kunststofflage (1a) mit einer Absorberschicht (5) versehen ist, und dass die untere Kunststofflage (1b) eine gegenüber der oberen Kunststofflage (1a) reduzierte Temperaturbeständigkeit aufweist.

2. Kollektor (1) nach Anspruch 1, **dadurch gekennzeichnet, dass** die Absorberschicht (5) mit der oberen Kunststofflage (1a) koextrudiert ist.

3. Kollektor (1) nach Anspruch 1, **dadurch gekennzeichnet, dass** die Absorberschicht (5) auf die Innenfläche der oberen Kunststofflage (1a) auflaminiert ist.

4. Kollektor (1) nach Anspruch 1, **dadurch gekennzeichnet, dass** die untere Kunststofflage (1b) zumindest teilweise strahlungsabsorbierend gestaltet ist.

5. Kollektor (1) nach Anspruch 1, **dadurch gekennzeichnet, dass** die untere Kunststofflage (1b) transparent gestaltet ist.

## Claims

1. A solar-thermal collector (1) with a collector housing formed by an upper plastic layer (1a) facing solar rays and by a lower plastic layer (1b) not facing the solar rays, whereby between the two plastic layers (1a, 1b) there is formed at least one hollow chamber (H) for passage of a heat-transport medium, in particular water, wherein the upper plastic layer (1a) has a transparent design, wherein the upper and lower plastic layers (1a, 1b) are welded together and wherein the upper plastic layer (1a) is manufactured from another plastic material than the lower plastic layer (1b), **characterized in that** the inner surface of the upper plastic layer (1a) facing the hollow chamber has an absorbing layer (5) and **in that** the lower plastic layer (1b) has a lower resistance to temperature than the upper plastic layer (1a).

2. The collector (1) according to Claim 1, **characterized in that** the absorbing layer (5) is co-extruded together with the upper plastic layer (1a).

3. The collector (1) according to Claim 1, **characterized in that** the absorbing layer (5) is laminated onto the inner surface of the upper plastic layer (1 a).

4. The collector (1) according to Claim 1, **characterized in that** the lower plastic layer (1b) is configured at least partly ray-absorbing.

5. The collector (1) according to Claim 1, **characterized in that** the lower plastic layer (1b) is designed transparent.

## Revendications

1. Collecteur thermique solaire (1) avec un boîtier de collecteur formé par une couche supérieure de plastique (1a) faisant face aux rayons solaires et une couche inférieure de plastique (1b) ne faisant pas face aux rayons solaires, sachant qu'est formée entre les deux couches de plastique (1a, 1 b) au moins une cavité (H) pour le passage d'un fluide caloporteur, en particulier de l'eau, que la couche supérieure de plastique (1a) est transparente, que la couche supérieure de plastique et la couche inférieure de plastique (1a, 1 b) sont soudées l'une à l'autre, et que la couche supérieure de plastique (1a) est fabriquée en un matériau plastique différent de celui de la couche inférieure de plastique (1 b), **caractérisé en ce que** la face intérieure de la couche supérieure de plastique (1a) tournée vers la cavité (H) est pourvue d'une couche absorbante (5), et que la couche inférieure de plastique (1 b) présente, par rapport à la couche supérieure de plastique (1a), une résistance thermique moins importante.

2. Collecteur (1) selon la revendication 1, **caractérisé en ce que** la couche absorbante (5) est coextrudée avec la couche supérieure de plastique (1a).

3. Collecteur (1) selon la revendication 1, **caractérisé en ce que** la couche absorbante (5) est laminée sur la face intérieure de la couche supérieure de plastique (1 a).

4. Collecteur (1) selon la revendication 1, **caractérisé en ce que** la couche inférieure de plastique (1 b) est conçue au moins en partie de manière à absorber le rayonnement.

5. Collecteur (1) selon la revendication 1, **caractérisé en ce que** la couche inférieure de plastique (1 b) est transparente.
